# EUROPÄISCHE PATENTSCHRIFT

(11) **EP 0 471 251 B1**
(45) Veröffentlichungstag und Bekanntmachung des Hinweises auf die Patenterteilung: **10.05.1995**
(21) Anmeldenummer: 91113020.1
(22) Anmeldetag: 02.08.1991
(51) Int. Cl.: C08G 18/71, C08G 18/46, C09J 175/06

(54) **Verwendung von Estergruppen aufweisenden Polyisocyanaten als Schmelzklebstoff**
Use of ester groups containing polyisocyanates as hot melt adhesive
Utilisation de polyisocyanates contenant des groupes d'ester pour un adhésif de fusion

(30) Priorität: 15.08.1990 DE 4025779
(43) Veröffentlichungstag der Anmeldung: 19.02.1992
(73) Patentinhaber: BAYER AG, 51368 Leverkusen (DE)
(72) Erfinder: Schmalstieg, Lutz, Dr., W-5000 Köln 1 (DE); Hänsel, Eduard, Dr., W-5600 Wuppertal 1 (DE); Nachtkamp, Klaus, Dr., W-4000 Düsseldorf 13 (DE); Königshofen, Heinrich, Dr., W-5060 Bergisch Gladbach 2 (DE); Ganster, Otto, Dr., W-5068 Odenthal (DE)

(56) Entgegenhaltungen:
- EP-A- 0 263 481
- EP-A- 0 394 760
- DE-A- 1 668 069
- JOURNAL OF POLYMER SCIENCE, PART A : POLYMER CHEMISTRY EDITION Bd. 27, Nr. 13,Dezember 1989, NEW YORK, US Seiten 4341 -4350; MORMANN ET AL: 'POLYMERS FROMMULTIFUNCTIONAL ISOCYANATES II'

## Beschreibung

Die Erfindung betrifft neue Schmelzklebstoffe mit hoher Abbindegeschwindigkeit und niedriger Schmelzviskosität.

Reaktive feuchtigkeitshärtende Schmelzklebstoffe aus der Klasse der isocyanatfunktionellen Prepolymeren sind beispielsweise aus DE-OS 2 401 320, EP-A 0 107 097 oder EP-A-0 125 009 bekannt. Klebstoffe der in diesen Vorveröffentlichungen genannten Art werden als heiße Schmelzen aufgetragen, erstarren beim Abkühlen und bauen damit rasch Festigkeit auf, so daß eine schnelle Weiterverarbeitung ermöglicht wird. Die Endfestigkeit wird durch vollständige Reaktion der noch vorhandenen freien Isocyanatgruppen mit beispielsweise Luftfeuchtigkeit unter Ausbildung von hochmolekularen Polyurethanpolyharnstoffen erreicht. Reaktive Schmelzklebstoffe werden besonders vorteilhaft ohne Lösungsmittel appliziert. Der Nachteil der in den genannten Veröffentlichungen beschriebenen Klebstoffe ist insbesondere in ihrer hohen Schmelzviskosität zu sehen. Eine möglichst geringe Schmelzviskosität ist jedoch im Interesse einer optimalen Benetzung der Oberfläche mit dem Klebstoff erstrebenswert.

Auch die Klebstoffe gemäß US-PS 3 827 224 benötigen eine verhältnismäßig hohe Temperatur, um die Viskosität des Klebstoffs auf einen für die Benetzung der Oberflächen ausreichend niedrigen Wert zu bringen. Bei 130°C werden noch Viskositäten von 7000 bis 20 000 mPa.s gemessen. Die Klebstoffe können daher nicht zum Verkleben temperaturempfindlicher Substrate verwendet werden.

Im übrigen ist es bei den heute in der Industrie üblichen sehr raschen Taktzeiten erforderlich, daß die Schmelzklebstoffe nach der Applikation sehr rasch durch Kristallisation abbinden und somit eine sofortige Weiterverarbeitung der verklebten Substrate ermöglichen.

Es war daher die der Erfindung zugrundeliegende Aufgabe neue reaktive Schmelzklebstoffe zur Verfügung zu stellen, die die Vorteile einer hohen Abbindegeschwindigkeit und einer niedrigen Schmelzviskosität in sich vereinigen.

Diese Aufgabe konnte mit der nachstehend näher beschriebenen erfindungsgemäßen Verwendung von bestimmten, Estergruppen aufweisenden Polyisocyanaten gelöst werden.

Gegenstand der Erfindung ist die Verwendung von Estergruppen aufweisenden Polyisocyanaten, die unterhalb 30°C fest und oberhalb 100°C flüssig sind, der Formel (I)

A(OCO-B-NCO)ₙ (I)

in welcher
- n: für eine ganze oder (im statistischen Mittel) gebrochene Zahl von 2 bis 6 steht,
- A: für einen n-wertigen organischen Rest steht, wie er durch Entfernung der Hydroxylgruppen aus einer n-wertigen, Ester- und/oder Carbonatgruppen aufweisenden Polyhydroxylverbindung des Molekulargewichtsbereichs Mn 800 bis 6000 erhalten wird,
und
- B: für einen aliphatischen, cycloaliphatischen oder aromatischen Kohlenwasserstoffrest mit bis zu 18 Kohlenstoffatomen steht
als lösungsmittelfreie Schmelzklebstoff zur Verklebung beliebiger hitzeresistenter Substrate.

Die DE-OS 2 120 090 beschreibt bereits NCO-Prepolymere, die konstitutionell den NCO-Prepolymeren, wie sie erfindungsgemäß verwendet werden, vergleichbar sind. Die NCO-Prepolymeren werden jedoch entsprechend der Lehre der genannten Veröffentlichungen zur Ausrüstung von Keratinfasern enthaltenden Textilien verwendet, für welchen Einsatzzweck die NCO-Prepolymeren in Form von stark verdünnten organischen Lösungen oder von wäßrigen Emulsionen zur Anwendung gelangen. Der genannten Veröffentlichung ist daher kein Hinweis auf eine besondere Eignung kristalliner NCO-Prepolymere als Schmelzklebstoffe zu entnehmen. Insbesondere fehlt jeglicher Hinweis auf die erfindungsgemäß besonders gut geeigneten Prepolymeren, die nach einem speziellen, nachstehend näher beschriebenen Verfahren hergestellt werden.

Die eigene ältere deutsche Patentanmeldung P 39 13 406.7 befaßt sich zwar mit solchen Prepolymeren, wie sie erfindungsgemäß bevorzugt verwendet werden, jedoch ausschließlich mit deren Verwendung zur Herstellung von feuchtigkeitshärtenden Beschichtungsmitteln oder Dichtmassen. Die Verwendung der Prepolymeren als Schmelzklebstoff oder zur Herstellung von Schmelzklebstoffen wird in der älteren, nicht vorveröffentlichten Anmeldung nicht beschrieben.

In der DE-OS 1 668 069 werden auch Estergruppen aufweisende Polyisocyanate beschrieben, die als Klebstoffe geeignet sein sollen. Da die Polyisocyanate dieser Vorveröffentlichung jedoch auf völlig andersartigen, niedermolekularen Polyhydroxylverbindungen basieren und, wie den Ausführungsbeispielen zu entnehmen, sich bezüglich ihres Schmelzverhaltens grundsätzlich von den erfindungsgemäß zu verwendenden Polyisocyanaten unterscheiden, ist die Schlußfolgerung erlaubt, daß die Autoren dieser Vorveröffentlichung Schmelzklebstoffe der erfindungsgemäß zu verwendenden Art nicht in Betracht zogen.

Die Herstellung der erfindungsgemäß zu verwendenden NCO-Prepolymeren der allgemeinen Formel (I) erfolgt durch geeignete Modifizierung von organischen Polyhydroxylverbindungen der allgemeinen Formel (V)

A (OH)ₙ (V).

Diese Modifizierung kann beispielsweise in einer Umsetzung der mehrwertigen Alkohole mit Isocyanatocarbonsäurechloriden der allgemeinen Formel (III)

ClOC-B-NCO (III)

entsprechend der Lehre der DE-OS 2 120 090 bestehen.

In diesen Formeln haben A, B und n die bereits obengenannte Bedeutung.

Bei den Polyhydroxylverbindungen der Formel (V) handelt es sich herstellungsbedingt oftmals um Gemische, so daß n im statistischen Mittel auch eine gebrochene Zahl innerhalb der obengenannten Bereiche bedeuten kann. Das gleiche gilt selbstverständlich für die auf derartigen Polyolgemischen basierenden erfindungsgemäß zu verwendenden Polyisocyanate der Formel (I).

Bei den zur Herstellung der erfindungsgemäß zu verwendenden NCO-Prepolymeren eingesetzten Polyhydroxylverbindungen der Formel (V) handelt es sich vorzugsweise um teilkristalline Verbindungen, die unterhalb 30°C, vorzugsweise unterhalb 40°C fest und oberhalb 100°C, vorzugsweise oberhalb 80°C flüssig sind. Die auf solchen Polyhydroxylverbindungen basierenden, NCO-Prepolymeren der Formel (I) entsprechen, insbesondere wenn sie nach der bevorzugten, nachstehend dargelegten Methode hergestellt worden sind, bezüglich ihres Schmelzverhaltens weitgehend den ihnen zugrundeliegenden Polyhydroxylverbindungen der Formel (V). Demzufolge handelt es sich auch bei den erfindungsgemäß zu verwendenden Estergruppen aufweisenden Polyisocyanaten der Formel (I) um Polyisocyanate bzw. Polyisocyanatgemische, die unterhalb 30°C, vorzugsweise unterhalb 40°C fest und oberhalb 100°C, vorzugsweise oberhalb 80°C flüssig sind,

Bei den im Rahmen der Erfindung bevorzugten Ausgangsmaterialien der Formel (III) bzw. (V) und somit bei den erfindungsgemäß bevorzugt zu verwendenden Estergruppen aufweisenden Polyisocyanate der Formel (I) handelt es sich um solche, für welche n für eine ganze oder gebrochene Zahl von 2 bis 3, insbesondere für 2 steht, A für einen n-wertigen Rest steht, wie er durch Entfernung der Hydroxylgruppen aus einer n-wertigen, Ester- und/oder Carbonatgruppen aufweisenden Polyhydroxylverbindung des Molekulargewichts 1000 bis 5000 erhalten wird und B für einen aliphatischen Kohlenwasserstoffrest mit 2 bis 10, insbesondere 5 bis 10 Kohlenstoffatomen steht Alle im Zusammenhang mit dem Molekulargewicht der höhermolekularen Alkohole der Formel (III) gemachten Angaben beziehen sich im übrigen auf das dampfdruckosmometrisch bestimmte Molekulargewicht. Die mittlere Funktionalität errechnet sich aus dem Hydroxylgruppengehalt und dem so ermittelten Molekulargewicht.

Erfindungsgemäß besonders bevorzugt zu verwendende Estergruppen aufweisende Polyisocyanate der Formel (I) sind jene, deren Herstellung aus den Ausgangsmaterialien der Formeln (III) und (V) in Analogie zu dem in DE-OS 3 634 248 beschriebenen Verfahren erfolgt.

Hierzu erfolgt in einer ersten Reaktionsstufe die Überführung der Polyhydroxylverbindungen in die entsprechenden O-silylierten Verbindungen der Formel (II)

A[OSiR₃]ₙ (II)

in Analogie zu der von M. Lalonde und C.H. Chan in "Synthesis" 1985, Seiten 817 bis 845, beschriebenen Verfahrensweise. Hierzu werden die Polyhydroxylverbindungen beispielsweise mit Chlorsilanen oder Disilazanen der allgemeinen Formel (IV) bzw. (VI)

R₃SiCl (IV)

bzw.

R₃Si-NH-SiR₃ (VI)

gegebenenfalls unter Mitverwendung eines Hilfslösungsmittels umgesetzt. Die Umsetzung mit einem Chlorsilan erfolgt im allgemeinen unter Einhaltung eines Molverhältnisses von Hydroxylgruppen zu Chlorsilan von 1:1 bis 1:2 bei Temperaturen zwischen 0 und 80°C. Die Reaktion erfordert in der Regel den Zusatz einer mindestens äquimolaren Menge einer organischen Base, z.B. Pyridin oder Triethylamin zum Binden des entstehenden Chlorwasserstoffs. Die Umsetzung mit Disilazanen erfolgt vorzugsweise unter Einhaltung eines Molverhältnisses von Hydroxylgruppen zu Disilazan von 1:0,5 bis 1:1 bei Temperaturen zwischen 60°C und 140°C bis die Abspaltung von Ammoniak zum Abschluß gekommen ist. Oftmals empfiehlt sich die Mitverwendung einer geringen Menge eines sauren Katalysators, beispielsweise eines Chlorsilans der obengenannten Art.

Für diese Umsetzung geeignete Lösungsmittel, die gegebenenfalls mitverwendet werden, sind beispielsweise n-Hexan, Cyclohexan, Toluol, Xylol, Methoxypropylacetat, Ethylacetat, Butylacetat, Methylethylketon oder Gemische derartiger Lösungsmittel. Für die Umsetzung geeignete Chlorsilane bzw. Disilazane sind insbesondere solche der obengenannten Formeln, für welche R für einen Alkylrest mit 1 bis 4 Kohlenstoffatomen oder einen Phenylrest, vorzugsweise für eine Methylgruppe steht.

Die O-silylierten Polyhydroxylverbindungen der Formel II werden anschließend durch Umsetzung mit Isocyanatocarbonsäurechloriden der genannten allgemeinen Formel (III) zur Reaktion gebracht. Hierbei wird die Menge der Reaktionspartner im allgemeinen so gewählt, daß auf jedes Mol Chlorcarbonylgruppe 0,8 bis 1,2 Mol silylierte Hydroxylgruppe entfallen.

Vorzugsweise wird unter Einhaltung von äquimolaren Mengen der Einsatzstoffe gearbeitet. Die Umsetzung der silylierten Hydroxylverbindungen mit Isocyanatosäurechloriden erfolgt im allgemeinen im Temperaturbereich von 50 bis 150°C, gegebenenfalls unter Zusatz der für diese Reaktion bekannten Katalysatoren wie z.B. Chinolin oder Pyridin.

Als Nebenprodukt der Umsetzung entsteht ein Trialkyl- oder Triarylchlorsilan, das sich destillativ bequem aus dem Reaktionsgemisch entfernen läßt.

Auch diese Umsetzung kann in An- und Abwesenheit eines Lösungsmittels der bereits oben beispielhaft genannten Art durchgeführt werden. Auf die Mitverwendung von Lösungsmitteln kann im allgemeinen verzichtet werden, wenn die eingesetzten silylierten Hydroxylverbindungen bei Reaktionstemperatur eine zur Durchführung des Verfahrens ausreichend niedrige Viskosität aufweisen.

Entsprechend der Aufgabenstellung, lösungsmittelfreie Schmelzklebstoffe bereitzustellen erfolgt die Herstellung der Estergruppen aufweisenden Polyisocyanate der Formel (I) vorzugsweise ohne Mitverwendung von inerten Lösungsmitteln der beispielhaft genannten Art. Erforderlichenfalls kann die Entfernung von flüchtigen Substanzen, inklusive von gegebenenfalls mitverwendeten Lösungsmitteln aus den Estergruppen aufweisenden Polyisocyanaten destillativ, z.B. durch Dünnschichtdestillation erfolgen.

Sowohl bei der bevorzugten Arbeitsweise zur Herstellung der Estergruppen aufweisenden Polyisocyanate der Formel (I) als auch bei der direkten Umsetzung der Polyhydroxylverbindungen (V) mit den Chlorcarbonylisocyanaten (III) gemäß DE-OS 2 120 090 können zum Erzielen besonderer Eigenschaften geringe Mengen an Dicarbonsäuredichloriden mitverwendet werden Solche Dicarbonsäuredichloride sind z.B. Phthalsäuredichlorid, Isophthalsäuredichlorid oder Terephthalsäuredichlorid. Auch in diesen Fällen wird die Menge der Reaktionspartner so gewählt, daß auf jedes Mol Chlorcarbonylgruppe 0,8 bis 1,2 Mol, vorzugsweise 1 Mol gegebenenfalls silylierte Hydroxylgruppe entfallen.

Bei den Polyhydroxylverbindungen der Formel (V) handelt es sich um Ester- und/oder Carbonatgruppen aufweisende Polyhydroxylverbindungen des bereits genannten Molekulargewichtsbereichs und des bereits genannten Schmelzverhaltens, wie sie im Prinzip aus der Polyurethanchemie bereits bekannt sind. Besonders bevorzugt geeignet sind teilkristalline, endständige Hydroxylgruppen aufweisende Polyesterpolyole, wie sie in an sich bekannter Weise durch Umsetzung von mehrbasischen Carbonsäuren mit überschüssigen Mengen an mehrwertigen Alkoholen zugänglich sind.

Als mehrbasische Carbonsäuren kommen insbesondere aliphatische Dicarbonsäuren mit 6 bis 14 Kohlenstoffatomen wie Adipinsäure, Sebacinsäure, Azelainsäure, Suberinsäure, Dodecandicarbonsäure oder Tetradecandicarbonsäure in Betracht, wobei die Säurekomponente auch gegebenenfalls geringe Mengen an cycloaliphatischen oder aromatischen Dicarbonsäuren bzw. Dicarbonsäureanhydriden enthalten kann.

Bei den zur Herstellung der Polyesterpolyole eingesetzten mehrwertigen Alkoholen handelt es sich vorzugsweise um Diole mit 2 bis 12 Kohlenstoffatomen wie z.B. Ethylenglykol, Propylenglykol, 1,4-Dihydroxybutan, 1,6-Dihydroxyhexan oder 1,12-Dihydroxydodecan. Die Alkoholkomponente kann jedoch auch noch mehrwertige Alkohole wie beispielsweise Trimethylolpropan oder Glycerin enthalten, so daß letztendlich verzweigte Polyesterpolyole der Formel (V) resultieren, für welche n für eine über 2 liegende ganze oder gebrochene Zahl innerhalb der obengemachten Grenzen bedeutet. Besonders bevorzugt erfolgt die Herstellung der Polyesterpolyole jedoch unter ausschließlicher Verwendung von difunktionellen Ausgangsmaterialien, so daß im wesentlichen Polyesterdiole erhalten werden.

Auch Polyester aus Lactonen, z.B. ε-Caprolacton oder aus Hydroxycarbonsäuren, z.B. ω-Hydroxycarbonsäure, sind einsetzbar.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Zur Herstellung der NCO-Prepolymeren geeignete Isocyanatocarbonsäurechloride der Formel (III) sind beispielsweise 3-Isocyanatopropionsäurechlorid, 4-Isocyanatobuttersäurechlorid, 6-Isocyanatocapronsäurechlorid, 11-Isocyanatoundecansäurechlorid, 4-Isocyanatobenzoesäurechlorid oder 4-Isocyanatocyclohexancarbonsäurechlorid, 6-Isocyanatocapronsäurechlorid ist besonders bevorzugt.

Die nach den beschriebenen Verfahren aus den beispielhaft genannten Ausgangsmaterialien hergestellten, erfindungsgemäß zu verwendenden Estergruppen aufweisende Polyisocyanate der Formel (I) können ohne weitere Zusätze als Schmelzklebstoffe eingesetzt werden oder auch in modifizierter Form als Schmelzklebstoff verwendet werden.

Die Applikation der Schmelzklebstoffe erfolgt lösungsmittelfrei. Die erwünschte Viskosität für die Beschichtung (2000 bis 10 000 mPa.s) kann eingestellt werden, indem man den Klebstoff auf eine relativ niedrige Temperatur von z.B. 80 bis 120°C erhitzt. Die erfindungsgemäßen Schmelzklebstoffe sind bei dieser Temperatur überraschend niedrigviskos und ermöglichen daher eine hervorragende Substratbenetzung.

Die Eigenschaft der erfindungsgemäßen Schmelzklebstoffe, nach erfolgter Applikation beim Abkühlen durch Kristallisation unverzüglich abzubinden führt zu einer hohen anfänglichen Haftfestigkeit ähnlich wie bei herkömmlichen Schmelzklebstoffen, da der Klebstoff beim Abkühlen auf eine Temperatur unterhalb des Schmelzpunktes spontan eine große Cohäsionskraft zeigt. Da die Klebstoffe aufgrund ihrer niedrigen Schmelzviskosität bei vergleichsweise sehr niedrigen Temperaturen angewendet werden können, können die Substrate unmittelbar nach dem Beschichten miteinander verklebt werden. Aufgrund der nur geringen Differenz zwischen Applikations- und Kristallisationstemperatur ermöglichen die erfindungsgemäßen Schmelzklebstoffe eine äußerst rationelle Arbeitsweise, beispielsweise bei der Serienproduktion von verklebten Gegenständen.

Die Applikation der erfindungsgemäßen Schmelzklebstoffe kann nach an sich bekannten Methoden erfolgen, wie sie für herkömmliche Schmelzklebstoffe bereits bekannt sind. Beispielsweise kann die Beschichtung der zu verklebenden Substrate durch Walzenauftrag, durch Gießauftrag, durch Extruder- oder durch Sprühauftrag erfolgen.

Die erfindungsgemäßen Schmelzklebstoffe sind, wenn sie unter Feuchtigkeitsausschluß bei Raumtemperatur bis 50°C gelagert werden, fast unbegrenzt haltbar. Sie können mit Füllstoffen wie z.B. Kreide, Schwerspat oder Polymerpulver wie z.B. PVC- oder ABS-Pulver, Farbstoffen, Harzen und/oder Streckölen modifiziert werden.

Um in hinreichend kurzer Zeit die Endfestigkeit aufzubauen, empfiehlt sich bei Einsatz der bevorzugt verwendeten Estergruppen aufweisenden Polyisocyanate (I) mit aliphatisch gebundenen Isocyanatgruppen der Zusatz von Reaktionsbeschleunigern. Dies sind die aus der Polyurethanchemie an sich bekannten Katalysatoren, wie z.B. tertiäre Amine wie Triethylamin, Pyridin, Methylpyridin, Benzyldimethylamin, N,N'-Dimethylaminocyclohexan, N-Methylpiperidin, Pentamethyldiethylentriamin, N,N'-Dimethylpiperazin, usw. Metallsalze wie Eisen(III)chlorid, Zinkchlorid, Zink-2-ethylcaproat, Zinn(II)-2-ethylcaproat, Dibutylzinn(II)-dilaurat oder Molybdänglykolat.

Normalerweise reicht die Substrat- und Luftfeuchtigkeit zur Endaushärtung aus, aber die Reaktion kann selbstverständlich durch zusätzliches Benebeln mit Wasser oder Glykolen und/oder Katalysatoren enthaltende Medien beschleunigt werden.

Die erfindungsgemäßen Schmelzklebstoffe eignen sich zum Verkleben der unterschiedlichsten Substrate wie z.B. Metallen, Holz, Holz enthaltende Produkte, Papier, Glas, Keramik, Leder oder Kunststoffe, in massiver oder geschäumter Form wie beispielsweise PVC, PUR, ABS, Polyethylen oder Polypropylen mit sich selbst oder untereinander. Die Klebstoffe können für die verschiedensten Einsatzgebiete verwendet werden, wie beispielsweise als Montageklebstoff zur vorläufigen Fixierung von Bauteilen, als Buchbindeklebstoff, wo durch die rasche Kristallisation ein früher Festigkeitsaufbau erreicht wird, der eine schnelle Taktzeit auf den gängigen Buchbindemaschinen erlaubt oder zur rationellen Herstellung von flächigen Verbunden die sofort nach dem Verkleben unter hohen Spannungen stehen und deshalb einen Klebstoff mit sich rasch aufbauender, hoher Anfangsfestigkeit benötigen wie beispielsweise bei der Sohlenverklebung, der Möbelfertigung oder bei der Herstellung von Hutablagen oder anderen Innenteilen von Kraftfahrzeugen.

In den nachfolgenden Beispielen beziehen sich alle Prozentangaben auf Gewichtsprozente.

### Beispiele

### Allgemeine Herstellungsvorschrift für die Silylierung der Polyhydroxylverbindungen

1 OH-Äquivalent einer Polyhydroxylverbindung und 0,7 Mol Hexamethyldisilazan werden unter Zusatz von 2 ml Trimethylchlorsilan bei 80 bis 120°C bis zum Ende der Ammoniakabspaltung gerührt. Die Reaktion kann IR-spektroskopisch anhand der Abnahme der OH-Bande verfolgt werden. Sobald keine OH-Bande mehr sichtbar ist, wird überschüssiges Disilazan durch Destillation unter vermindertem Druck entfernt.

### Beispiel 1

### Prepolymer auf Basis eines silylierten Polyesters:

2073 g eines Bis-trimethylsiloxy-Polyesters (Basispolyester aus Adipinsäure und Hexandiol, OH-Zahl 28, Schmelzpunkt 55 bis 58°C) und 175,5 g 6-Isocyanatocapronsäurechlorid werden unter Zusatz von 1 ml Pyridin bei 80 bis 100°C gerührt, bis das IR-Spektrum keine Säurechloridbanden mehr zeigt. Während der Umsetzung wird entstehendes Trimethylchlorsilan laufend abdestilliert.

Nach Entfernen von Resten flüchtiger Bestandteile durch Dünnschichtdestillation bei 140°C/0,05 mbar versetzt man mit 0,05 Gew.-% Dibutylzinndilaurat. Das erhaltene NCO-Prepolymer besitzt folgende Kenndaten:
- NCO-Gehalt:: 1,75 %
- Schmelzpunkt:: 55 bis 59°C
- Viskosität:: 600 mPa.s/120°C

### Beispiel 2

### Prepolymer auf Basis eines silylierten Polyesters:

1573 g eines Bis-trimethylsiloxy-Polyesters (Basispolyester aus Adipinsäure und Hexandiol, OH-Zahl 37,3, Schmelzpunkt 50 bis 53°C) und 175,5 g 6-Isocyanatocapronsäurechlorid werden unter Zusatz von 1 ml Pyridin wie in Beispiel 1 umgesetzt. Trimethylchlorsilan wird während der Umsetzung unter stetiger Verminderung des Druckes abdestilliert.

Nachdem das IR-Spektrum keine Säurechloridbande mehr zeigt, läßt man 4 Stunden bei 90°C/1 mbar nachrühren und versetzt anschließend mit 0,05 Gew.-% Dibutylzinndilaurat. Das erhaltene NCO-Prepolymer besitzt folgende Kenndaten:
- NCO-Gehalt:: 2,49 %
- Schmelzpunkt:: 52 bis 55°C
- Viskosität:: 5400 mPa.s/120°C

### Beispiel 3

### Prepolymer auf Basis eines silylierten Polyesters:

1573 g des Bis-trimethylsiloxy-Polyesters aus Beispiel 2 werden mit 30 g Terephthalsäuredichlorid und 123 g 6-Isocyanatocapronsäurechlorid unter Zusatz von 1 ml Pyridin wie in Beispiel 2 umgesetzt. Nach Zusatz von 0,05 Gew.-% Dibutylzinndilaurat besitzt das NCO-Prepolymer folgende Kenndaten:
- NCO-Gehalt:: 1,78 %
- Schmelzpunkt:: 53 bis 55°C
- Viskosität:: 5800 mPa.s/120°C

### Beispiel 4

### Prepolymer auf Basis eines silylierten Polycarbonats:

1073 g eines Bis-trimethylsiloxy-Polycarbonats (Basis Polycarbonat aus Hexandiol und Diphenylcarbonat, OH-Zahl 56, Schmelzpunkt 49 bis 52°C) und 175,5 g 6-Isocyanatocapronsäurechlorid werden wie in Beispiel 1 unter Zusatz von 1 ml Pyridin umgesetzt. Nach Entfernen von Resten flüchtiger Bestandteile durch Dünnschichtdestillation bei 140°C/0,05 mbar versetzt man mit 0,05 Gew.-% Dibutylzinndilaurat. Das erhaltene NCO-Prepolymer besitzt folgende Kenndaten:
- NCO-Gehalt:: 3,35 %
- Schmelzpunkt:: 45 bis 49°C
- Viskosität:: 1400 mPa.s/120°C

### Erfindungsgemäße Verwendung

Die auf 120°C erwärmten Prepolymeren werden über eine Hotmelt-Spritzpistole mit heizbarer Kartusche (Fa. Beyer & Otto, Kleinostheim) auf Buchenholzprüfkörper der Abmessungen 120 x 25 x 4 mm appliziert.

Unmittelbar nach dem Klebstoffauftrag erfolgt Verklebung mit einem zweiten gleichartigen Buchenholzprüfkörper, wobei die Prüfkörper auf einer Fläche von 25 x 25 mm überlappen. Man stellt durch Abstandhalter eine Fügespaltdicke von ca. 0,2 mm ein.

Die so verklebten Prüflinge werden nun nach 5 min und nach 7 d Lagerung bei 23°C und 50 % Luftfeuchtigkeit in Anlehnung an DIN 53 283 auf Zugscherfestigkeit geprüft. Die angegebenen Meßwerte sind Mittelwerte aus fünf Messungen.

Als Abbindezeit wird die Zeit verstanden, innerhalb der die frisch verklebten Buchenholzprüfkörper durch festen Fingerdruck noch gegeneinander verschiebbar sind.

| Beispiel | Abbindezeit | Zugscherfestigkeit nach 5 min | Zugscherfestigkeit nach 7 d |
|---|---|---|---|
| 1 | 2 sec | 3,8 N/mm² | 8,9 N/mm² |
| 2 | 4 sec | 3,7 N/mm² | 5,8 N/mm² |
| 3 | 6 sec | 0,9 N/mm² | 6,0 N/mm² |
| 4 | 7 sec | 2,9 N/mm² | 8,2 N/mm² |

## Patentansprüche

1. Verwendung von Estergruppen aufweisenden Polyisocyanaten, die unterhalb 30°C fest und oberhalb 100°C flüssig sind, der Formel (I)
A(OCO-B-NCO)ₙ (I)
in welcher
n für eine ganze oder (im statistischen Mittel) gebrochene Zahl von 2 bis 6 steht,
A für einen n-wertigen organischen Rest steht, wie er durch Entfernung der Hydroxylgruppen aus einer n-wertigen, Ester- und/oder Carbonatgruppen aufweisenden Polyhydroxylverbindung des Molekulargewichtsbereichs Mn 800 bis 6000 erhalten wird,
und
B für einen aliphatischen, cycloaliphatischen oder aromatischen Kohlenwasserstoffrest mit bis zu 18 Kohlenstoffatomen steht
als lösungsmittelfreie Schmelzklebstoffe zur Verklebung beliebiger hitzeresistenter Substrate.

2. Verwendung gemäß Anspruch 1, dadurch gekennzeichnet, daß solche Polyisocyanate der Formel (I) eingesetzt werden, für welche
n eine ganze oder gebrochene Zahl von 2 bis 3 bedeutet,
A für einen n-wertigen Rest steht, wie er durch Entfernung der Hydroxylgruppen aus einer n-wertigen Ester- und/oder Carbonatgruppen aufweisenden Polyhydroxylverbindung des Molekulargewichts Mn 1000 bis 5000 erhalten wird,
und
B für einen aliphatischen Kohlenwasserstoffrest mit 2 bis 10 Kohlenstoffatomen steht.

3. Verwendung gemäß Anspruch 1 und 2, dadurch gekennzeichnet, daß solche Polyisocyanate der Formel (I) verwendet werden, die durch Umsetzung von o-silylierten, mehrwertigen Alkoholen der allgemeinen Formel (II)
A[-OSiR₃]ₙ (II)
mit Isocyanatocarbonsäurechloriden der allgemeinen. Formel (III)
ClOC-B-NCO (III)
unter Abspaltung von Chlorsilanen der allgemeinen Formel (IV)
Cl-SiR₃ (IV)
hergestellt worden sind, wobei
n, A und B die in Anspruch 1 genannte Bedeutung haben und
R für einen Alkylrest mit 1 bis 4 Kohlenstoffatomen oder einen Phenylrest steht.

4. Verwendung gemäß Anspruch 1 bis 3, wobei in den Schmelzklebstoffen die Polyisocyanate der Formel (I) gegebenenfalls in Kombination mit Hilfs- und Zusatzmitteln vorliegen, zum Verkleben von gleichen oder unterschiedlichen Substraten, ausgewählt aus der Gruppe bestehend aus Metallen, Glas, Holz, Papier, Keramik, Leder und Kunststoffen.

## Claims

1. The use of polyisocyanates containing ester groups which are solid below 30°C and liquid above 100°C and which correspond to formula (I):
A(OCO-B-NCO)ₙ (I)
in which
n is a whole or (on a statistical average) broken number of 2 to 6,
A is an n-functional organic residue of the type obtained by removal of the hydroxyl groups from an n-functional polyhydroxyl compound containing ester and/or carbonate groups with a molecular weight Mn in the range from 800 to 6,000 and
B is an aliphatic, cycloaliphatic or aromatic hydrocarbon radical containing up to 18 carbon atoms,
as solventless hotmelt adhesives for bonding heat-resistant substrates.

2. The use claimed in claim 1, characterized in that polyisocyanates corresponding to formula (I), in which
n is a whole or broken number of 2 to 3,
A is an n-functional organic residue of the type obtained by removal of the hydroxyl groups from an n-functional polyhydroxyl compound containing ester and/or carbonate groups with a molecular weight Mn in the range from 1,000 to 5,000 and
B is an aliphatic hydrocarbon radical containing 2 to 10 carbon atoms,
are used.

3. The use claimed in claims 1 and 2, characterized in that polyisocyanates corresponding to formula (I) used have been obtained by reaction of o-silylated polyhydric alcohols corresponding to general formula (II):
A[-OSiR₃]ₙ (II)
in which A and n are as defined in claim 1,
with isocyanatocarboxylic acid chlorides corresponding to general formula (III):
ClOC-B-NCO (III),
in which B is as defined in claim 1,
the reaction being accompanied by elimination of chlorosilanes corresponding to general formula (IV):
Cl-SiR₃ (IV),
in which R is a C₁₋₄ alkyl group or a phenyl group.

4. The use claimed in claims 1 to 3, the polyisocyanates corresponding to formula (I) optionally being present in combination with auxiliaries and additives in the hotmelt adhesives, for bonding substrates of the same kind or of different kinds selected from the group consisting of metals, glass, wood, paper, ceramics, leather and plastics.

## Revendications

1. Utilisation de polyisocyanates à groupes ester, à l'état solide au-dessous de 30°C et à l'état liquide au-dessus de 100°C, répondant à la formule I
A(OCO-B-NCO)ₙ (I)
dans laquelle
n est un nombre entier ou (en moyenne statistique) fractionnaire allant de 2 à 6,
A représente un radical organique de valence n tel qu'obtenu par élimination des groupes hydroxy d'un composé polyhydroxylé à groupes ester et/ou carbonate, de valence n et de poids moléculaire Mn 800 à 6 000,
et
B représente un radical hydrocarboné aliphatique, cycloaliphatique ou aromatique contenant jusqu'à 18 atomes de carbone,
en tant que colles fusibles sans solvant pour le collage de supports quelconques résistant à la chaleur.

2. Utilisation selon la revendication 1, caractérisée en ce que l'on utilise des polyisocyanates de formule I dans laquelle
n est un nombre entier ou fractionnaire allant de 2 à 3,
A représente un radical de valence n tel qu'obtenu par élimination des groupes hydroxy d'un composé polyhydroxylé à groupes ester et/ou carbonate, de valence n et de poids moléculaire Mn 1 000 à 5 000,
et
B représente un radical hydrocarboné aliphatique en C₂-C₁₀.

3. Utilisation selon les revendications 1 et 2, caractérisée en ce que l'on utilise des polyisocyanates de formule I qui ont été préparés par réaction d'alcools polyvalents O-silylés de formule générale II
A[OSiR₃]ₙ (II)
avec des chlorures d'acides isocyanatocarboxyliques de formule générale III
Cl0C-B-NCO (III)
avec élimination de chlorosilanes de formule générale IV
Cl-SiR₃ (IV)
n, A et B ayant les significations indiquées dans la revendication 1 et
R représentant un groupe alkyle en C₁-C₄ ou phényle.

4. Utilisation selon les revendications 1 à 3 de colles fusibles contenant les polyisocyanates de formule I, le cas échéant en combinaison avec des produits auxiliaires et additifs, pour le collage de supports identiques ou différents choisis parmi les métaux, le verte, le bois, le papier, les matières céramiques, le cuir et les résines synthétiques.
